Europäisches Patentamt

European Patent Office

Office européen des brevets

(19)

(11) Numéro de publication: **0 363 657**
**A2**

(12)

# DEMANDE DE BREVET EUROPEEN

(21) Numéro de dépôt: 89116761.1

(51) Int. Cl.⁵: **E03C 1/04 , F16K 11/00**

(22) Date de dépôt: **11.09.89**

(30) Priorité: **28.09.88 IT 2209088**

(43) Date de publication de la demande:
**18.04.90 Bulletin 90/16**

(84) Etats contractants désignés:
**CH DE FR LI**

(71) Demandeur: **Newform S.r.l.**
**Corso Garibaldi, 38**
**I-28078 Romagnano Sesia (Novara)(IT)**

(72) Inventeur: **Gessi, Tiziano**
**Guardella**
**I-13011 Borgosesia Vercelli(IT)**
Inventeur: **Gessi, Umberto**
**Guardella**
**I-13011 Borgosesia Vercelli(IT)**

(74) Mandataire: **Forattini, Amelia et al**
**c/o Internazionale Brevetti Ingg. ZINI,**
**MARANESI & C. S.r.l. Piazza Castello 1**
**I-20121 Milano(IT)**

(54) Dispositif mélangeur-distributeur d'eau, plus particulièrement destiné aux baignoires douches et appareils similaires.

(57) Le dispositif comprend des moyens mélangeurs pour le mélange de l'eau froide et de l'eau chaude, et des moyens de déviation automatiques pour envoyer l'eau mélangée sélectivement à l'une d'au moins des trois sorties respectivement reliées au distributeur de la douche, au bec de déversement pour le remplissage d'une baignoire et à une douchette à main. Les moyens mélangeurs et les moyens de déviation, ces derniers étant constitués par deux vannes, sont logés dans un bloc unique, susceptible d'être obtenu par assemblage ou par coulée.

Fig. 1

EP 0 363 657 A2

# DISPOSITIF MELANGEUR-DISTRIBUTEUR D'EAU, PLUS PARTICULIEREMENT DESTINE AUX BAIGNOIRES DOUCHES ET APPAREILS SIMILAIRES

On sait que deviennent de plus en plus usuelles les baignoires qui sont dotées, en plus du bec normal de déversement, d'une douchette à main et d'un distributeur normalement prévu vers le haut pour la douche.

Pour mélanger l'eau froide et l'eau chaude provenant du réseau d'alimentation et pour assurer la distribution de l'eau mélangée, on a proposé différents dispositifs.

Habituellement, on a recours à un groupe mélangeur, par exemple du type comprenant une commande unique pour le réglage de la température et du débit, qui est équipé d'un sélecteur propre à envoyer l'eau mélangée soit au distributeur supérieur, soit au bec de déversement. A ce dernier est ordinairement associé un second sélecteur agencé pour envoyer l'eau soit audit bec, soit à une douchette à main elle-même alimentée à travers un flexible.

Un tel agencement comprenant deux sélecteurs n'est pas satisfaisant, et ce aussi bien du point de vue du fabricant que de celui de l'utilisateur qui ne peut trouver toutes les commandes en un seul point.

Le but principal dela présente invention vise la réalisation d'un dispositif mélangeur-distributeur d'eau pour baignoires,douches ou similaires qui soit susceptible d'être très aisément actionné par l'utilisateur et qui comporte un caractère compact.

Dans cette optique, le but de l'invention est de réaliser un dispositif susceptible d'être obtemu de manière très simple sur le plan de la construction, à partir des dispositifs mélangeurs connus.

Un autre but encore de l'invention est de permettre l'obtention d'un dispositif de prix de revient relativement peu élevé et en conséquence très avantageux sur le plan économique.

Les buts qui précèdent et d'autres qui apparaîtront mieux dans la description qui va suivre sont atteints par un dispositif mélangeur-distributeur, plus particulièrement destiné aux baignoires, douches et appareils similaires comprenant une entrée d'eau chaude, une entrée d'eau froide et au moins trois sorties d'eau mélangée, ledit dispositif, comprenant des moyens mélangeurs automatiques aptes à assurer le mélange de l'eau provenant des entrées précitées, étant caractérisé en ce qu'il comporte en outre des moyens de déviation pour distribuer sélectivement l'eau mélangée à l'une d'au moins des trois sorties précitées,lesquels moyens de déviation font bloc avec lesdits moyens mélangeurs.

D'autres caractéristiques et avantages de l'invention vont ressortir de manière évidente de la description d'une forme de réalisation préférée, mais non exclusive, de ladite invention telle qu'elle est illustrée à titre d'exemple non limitatif sur le dessin annexé, dans lequel:

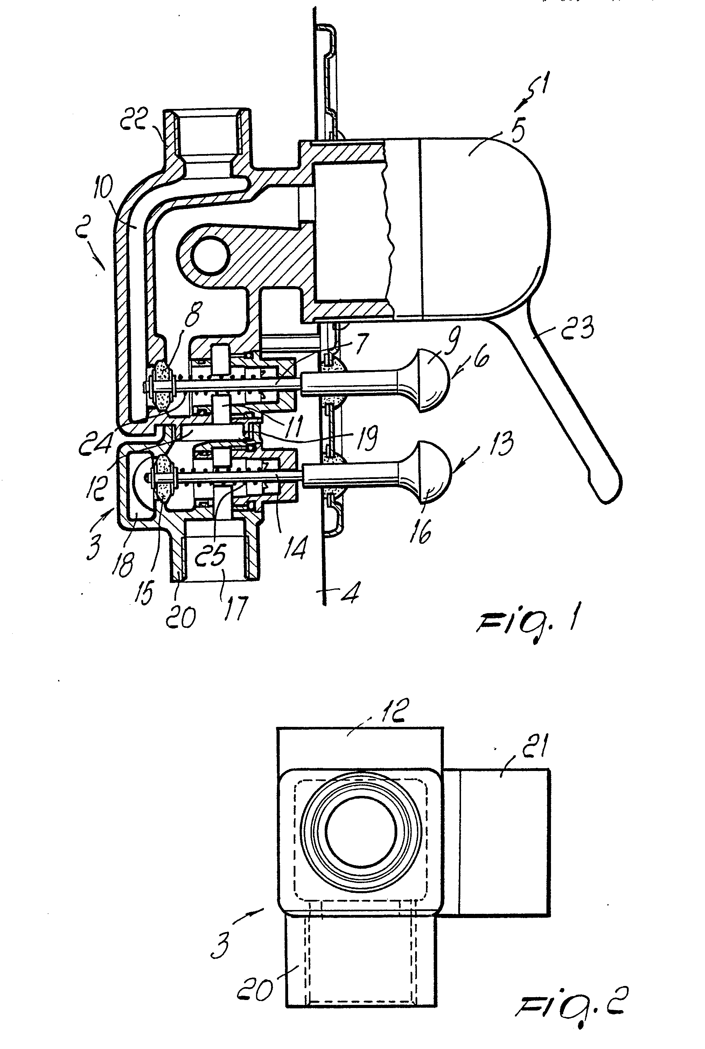

Fig. 1 est une coupe verticale du dispositif suivant l'invention.

Fig. 2 est une vue en élévation du second boîtier supposé isolé.

Sur ce dessin, le dispositif, globalement référencé 1, comprend un premier boîtier 2 associé à un second boîtier 3, ces deux boîtiers étant encastrés dans une paroi 4, prévue par exemple au niveau d'une baignoire ou d'une douche.

Dans le corps 2 débouchent une entrée pour l'eau chaude et une entrée pour l'eau froide, ces deux entrées, non représentées, étant reliées à un mélangeur mono-commande 5 de type en soi connu.

Ce mélangeur 5, par le lévier 23 , permet le réglage de la temperature et du débit de l'eau qui est envoyée à une première vanne de déviation 6 essentiellement constituée d'une tige de commande 7 supportant une garniture d'étanchéité 8, un ressort 24 de retour automatique et un pommeau d'actionnement 9.

Le vanne 6 envoie sélectivement l'eau mélangée soit à une première chambre 10 reliée à une première sortie, soit à une chambre intermédiaire 11 présentant un passage 12.

En vis-à-vis de ce passage est monté le boîtier 3 qui est équipé d'une seconde vanne de déviation 13 comprenant elle-aussi une tige de commande 14 pourvue d'une garniture d'étanchéité 15,d' un ressort 25 de retour automatique et d'un pommeau d'actionnement 16.

Cette vanne 13 dirige l'eau provenant du passage 12 soit vers une seconde sortie 17, soit vers une troisième sortie 18.

De manière plus détaillée, la chambre intermédiaire 11 comporte un passage co-axial à la tige de commande 7 qui communique avec le passage 12, lequel est cylindrique et tourné vers le bas. En vis-à-vis de ce passage 12 est prévu un anneau 19 solidaire du boîtier 2 ou 3 et auquel est fixé l'autre boîtier, par exemple par soudure ou par vissage. Le boîtier 3 peut avantageusement constituer un ensemble monobloc avec le boîtier 2 en ayant recours à un noyau fusible de fonderie.

Le boîtier 3 est à son tour doté d'un manchon 20 associé à la sortie 17; ce manchon, tourné vers le bas, est prévu fileté pour la fixation du bec de déversement (non représenté) pour le remplissage de la baignoire ou douche.

La sortie 18 est formée par un manchon 21 orienté horizontalement, perpendiculairement à l'axe de la tige 14 de la vanne 13.

A ce manchon 21 viendra se raccorder une canalisation pour l'alimentation d'une douchette à main.

Sur le boîtier 2 est prévu, avantageusement dans sa partie supérieure, un manchon fileté 22 qui communique avec la première chambre 10 et qui constitue la première sortie, propre à être raccordée par exemple au tube de fixation d'un distributeur pour douche (non représenté).

Le fonctionnement du dispositif va maintenant être exposé.

La manoeuvre du levier 23 du mélangeur 5 permet le réglage de la température et du débit d'eau, à la manière usuelle.

La manoeuvre du pommeau 9 associé à la vanne 6 permet d'envoyer sélectivement l'eau soit au distributeur de la douche (sortie 22), soit au bec de déversement de la baignoire. Le pommeau 16 de la vanne 13 permet au contraire la sélection de la sortie d'eau du bec de déversement (sortie 20) ou bien de la douchette à main (sortie 21).

On conçoit aisément que le dispositif suivant l'invention permet bien d'atteindre le but préfixé, à savoir une sélection aisée de la distribution de l'eau avec un actionnement disposé dans un seul bloc.

Un avantage de l'invention réside dans la simplicité structurelle du dispositif, autorisant un prix de revient particulièrement favorable.

Le dispositif ainsi conçu est susceptible de nombreuses variantes de réalisation qui entrent toutes dans l'étendue du concept inventif, étant entendu qu'on peut avoir recours à tous équivalents techniques.

Il va de soi que les matériaux employés comme les dimensions peuvent être quelconques, en fonction des exigences et de l'état de la technique.

## Revendications

1. Dispositif mélangeur-distributeur d'eau, notamment destiné aux baignoires, douches ou appareils similaires présentant une entrée d'eau chaude, une entrée d'eau froide et au moins trois sorties pour l'eau mélangée, comprenant des moyens mélangeurs automatiques aptes à opérer le mélange de l'eau provenant des entrées précitées, caractérisé en ce qu'il comprend des moyens de déviation pour diriger sélectivement l'eau mélangée à l'une des trois sorties précitées, ces moyens de déviation faisant bloc avec les moyens mélangeurs susmentionnés.

2. Dispositif suivant la revendication 1, caractérisé en ce que les moyens de déviation comprennent une première vanne propre à diriger l'eau soit vers une première chambre reliée à une première sortie, soit à une chambre internédiaire, et une seconde vanne apte à diriger l'eau provenant de ladite chambre intermédiaire soit vers une seconde sortie, soit vers une troisième.

3. Dispositif suivant l'une quelconque des revendications 1 et 2, caractérisé en ce que chacune des deux vannes de déviation comprend une tige coulissante de commande pourvue d'un pommeau extérieur d'actionnement manuel.

4. Dispositif suivant l'une au moins des revendications qui précèdent, caractérisé en ce qu'il comprend un premier boîtier équipé des moyens mélangeurs, des entrées d'eau froide et chaude, de la première sortie d'eau, de la chambre intermédiaire et de la première vanne de déviation, et un second boîtier pourvu de la seconde vanne de déviation et des deuxième et troisième sorties d'eau, les deux boîtier étant associés l'un à l'autre au niveau de la chambre intermédiaire.

5. Dispositif suivant l'une au moins des revendications qui précèdent, caractérisé en ce que la première sortie est reliée à un distributeur fixe pour la douche, la seconde au bec de déversement pour le remplissage de la baignoire ou douches, et la troisième à une douchette à main.

6. Dispositif suivant la revendication 3, caractérisé en ce que ladite tige de commande comprend un ressort de retour automatique.

*Fig. 1*

*Fig. 2*